# EUROPEAN PATENT APPLICATION

(11) **EP 4 053 505 A1**
(43) Date of publication of application: **07.09.2022**
(21) Application number: 22159371.8
(22) Date of filing: 01.03.2022
(51) Int. Cl.: G01C 21/20, G01S 17/00, G06K 9/00, G06T 5/00, G05D 1/00

(54) **NOISE REDUCTION APPARATUS AND METHOD FOR MAP OF ROBOT**

(30) Priority: 02.03.2021 KR 20210027648; 07.06.2021 KR 20210073683
(71) Applicant: Miele & Cie. KG, 33332 Gütersloh (DE); Yujin Robot Co., Ltd., Incheon, 22013 (KR)
(72) Inventor: Seo, Eong Hyeon, Incheon (KR); Kim, Jin Baek, Incheon (KR); Park, Ji Gwan, Incheon (KR); Kim, Chang Soo, Incheon (KR); Park, Seong Ju, Incheon (KR)
(74) Representative: Ellerbrächter, Dirk

(57) **Abstract**

A map noise reduction apparatus and method of a robot according to the exemplary embodiment of the present disclosure reduce a noise such as an outer noise and an inner nose which may be caused due to a sensor characteristic and an environmental factor while generating a grid map and simplify a contour of the grid map to provide a neater and clear grid map.

## Description

### CROSS-REFERENCE TO RELATED APPLICATIONS

This application is based on and claims priority under 35 U.S.C. 119 to Korean Patent Application No. 10-2021-0027648 filed in the Korean Intellectual Property Office on March 2, 2021, and Korean Patent Application No. 10-2021-0073683 filed in the Korean Intellectual Property Office on June 7, 2021, the entire contents of which are herein incorporated by reference in its entirety.

### BACKGROUND

### Field

The present disclosure relates a map noise reduction apparatus and method of a robot, and more particularly, to an apparatus and a method for reducing a noise of a grid map.

### Description of the Related Art

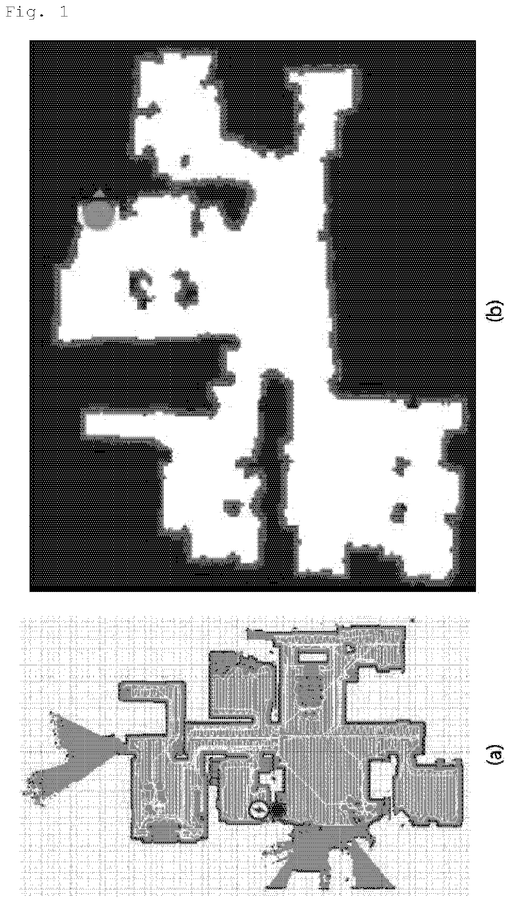

FIG. 1 is a view illustrating an example of a grid map of the related art.

A cleaning robot of the related art draws a grid map as illustrated in FIG. 1 to store the cleaning state and supply the grid map to a user. Such a grid map has a noise due to a sensor error due to a color/material of an obstacle such as a wall and a robot position error due to a slippery floor and has an uneven outline.

When the grid map is neatly generated and is displayed to the user, the user may recognize that the cleaning robot accurately figures out a structure of their house and thoroughly cleans the house.

Accordingly, the grid map which is not neatly generated due to the noise may be considered to have a poor performance by the user and an operation error (a cleaning pattern and an obstacle avoidance navigation) of the cleaning may be caused.

### SUMMARY

An object to be achieved by the present disclosure is to provide an apparatus and a method for reducing a map noise of a robot to reduce a noise such as an outer noise and an inner nose which may be caused due to a sensor characteristic and an environmental factor while generating a grid map.

Another object to be achieved by the present disclosure is to provide an apparatus and a method for reducing a map noise of a robot to simplify a contour of a grid map.

Other and further objects of the present invention which are not specifically described can be further considered within the scope easily deduced from the following detailed description and the effect.

In order to achieve the above-described objects, according to an aspect of the present disclosure, a map noise reduction apparatus of a robot includes a map building unit which builds a grid map; and a noise reducing unit which reduces a noise of the grid map build by the map building unit.

Here, the noise reducing unit includes: a binarization module which binarizes the grid map; an inner noise reducing module which reduces an inner noise of the grid map; an outer noise reducing module which reduces an outer noise of the grid map; and a simplification module which simplifies a contour of the grid map.

Here, the binarization module binarizes the grid map by changing a pixel value into a first value when the pixel value of each pixel of the grid map is smaller than a predetermined reference value and changing the pixel value into a second value when the pixel value is larger than the predetermined reference value.

Here, the inner noise reducing module reduces the inner noise of the grid map by updating a value of each pixel located in an inner region of the grid map on the bases of values of surrounding pixels.

Here, the inner noise reducing module changes the pixel value into a first value when an average value of neighboring pixels of a pixel located in the inner region of the grid map is smaller than a predetermined value and changes the pixel value into a second value when the average value of the neighboring pixels of the pixel is larger than the predetermined reference value.

Here, the inner noise reducing module acquires the average value of the neighboring pixels of the pixel by calculating a weighted average on the basis of a predetermined weight and the predetermined weight is set such that a weight of the neighboring pixel located in the inner region of the grid map has a higher value than a weight of a neighboring pixel located in an outer region of the grid map.

Here, the outer noise reducing module reduces the outer noise of the grid map by updating values of pixels adjacent to an obstacle on the basis of the shortest distance of each pixel located in the grid map to an obstacle.

Here, the outer noise reducing module acquires the shortest distance to the obstacle by calculating a distance to the closest pixel having a first value with respect to each of pixels located in the grid map and acquires an obstacle corresponding to the grid map on the basis of the shortest distance of each pixel located in the grid map to the obstacle and changes values of pixels adjacent to the obstacle into a first value.

Here, the simplification module acquires one or more independent polygons by a connected component labeling (CCL) method on the basis of the grid map and simplifies a contour of one or more polygon using Douglas-Peucker method.

In order to achieve the above-described objects, according to another aspect of the present disclosure, a map noise reduction method of a robot includes building a grid map; and reducing a noise of the grid map.

Here, the reducing of a noise includes: binarizing the grid map; reducing an inner noise of the grid map; reducing an outer noise of the grid map; and simplifying a contour of the grid map.

Here, in the binarizing of the grid map, the grid map is binarized by changing a pixel value into a first value when the pixel value of each pixel of the grid map is smaller than a predetermined reference value and changing the pixel value into a second value when the pixel value is larger than the predetermined reference value.

Here, in the reducing of an inner noise, the inner noise of the grid map is reduced by updating a value of each pixel located in an inner region of the grid map on the bases of values of surrounding pixels.

Here, in the reducing of an outer noise, the outer noise of the grid map is reduced by updating values of pixels adjacent to an obstacle on the basis of the shortest distance of each pixel located in the grid map to an obstacle.

In order to achieve the above-described technical objects, a computer program according to an exemplary embodiment of the present disclosure is stored in a computer readable recording medium to execute any one of the map noise reducing methods of a robot on a computer.

According to the exemplary embodiment of the present disclosure, a map noise reduction apparatus and method of a robot reduce a noise such as an outer noise and an inner nose which may be caused due to a sensor characteristic and an environmental factor while generating a grid map to provide a neater grid map.

Further, a contour of the grid map is simplified to provide a clearer grid map.

The effects of the present invention are not limited to the technical effects mentioned above, and other effects which are not mentioned can be clearly understood by those skilled in the art from the following description

### BRIEF DESCRIPTION OF THE DRAWINGS

FIG. 1 is a view illustrating an example of a grid map of the related art;
FIG. 2 is a block diagram illustrating a map noise reduction apparatus of a robot according to an exemplary embodiment of the present disclosure;
FIG. 3 is a view illustrating an example of a grid map according to an exemplary embodiment of the present disclosure;
FIG. 4 is a view for explaining a noise reducing process according to an exemplary embodiment of the present disclosure;
FIG. 5 is a view illustrating a grid map from which an inner noise is reduced, in the grid map illustrated in FIG. 3;
FIG. 6 is a view illustrating a grid map from which an outer noise is reduced, in the grid map illustrated in FIG. 5;
FIG. 7 is a view for explaining a simplifying process according to an exemplary embodiment of the present disclosure;
FIG. 8 is a view illustrating a grid map in which a contour is simplified, in the grid map illustrated in FIG. 6;
FIG. 9 is a flowchart illustrating a map noise reduction method of a robot according to an exemplary embodiment of the present disclosure; and
FIG. 10 is a flowchart for explaining sub steps of a noise reducing step illustrated in FIG. 9.

### DETAILED DESCRIPTION OF THE EMBODIMENT

Hereinafter, embodiments of the present disclosure will be described in detail with reference to the accompanying drawings. Advantages and characteristics of the present invention and a method of achieving the advantages and characteristics will be clear by referring to exemplary embodiments described below in detail together with the accompanying drawings. However, the present invention is not limited to exemplary embodiments disclosed herein but will be implemented in various different forms. The exemplary embodiments are provided by way of example only so that a person of ordinary skilled in the art can fully understand the disclosures of the present invention and the scope of the present invention. Therefore, the present invention will be defined only by the scope of the appended claims. Like reference numerals indicate like elements throughout the specification.

Unless otherwise defined, all terms (including technical and scientific terms) used in the present specification may be used as the meaning which may be commonly understood by the person with ordinary skill in the art, to which the present invention belongs. It will be further understood that terms defined in commonly used dictionaries should not be interpreted in an idealized or excessive sense unless expressly and specifically defined.

In the specification, the terms "first" or "second" are used to distinguish one component from the other component so that the scope should not be limited by these terms. For example, a first component may be referred to as a second component, and similarly, a second component may be referred to as a first component.

In the present specification, in each step, numerical symbols (for example, a, b, and c) are used for the convenience of description, but do not explain the order of the steps so that unless the context apparently indicates a specific order, the order may be different from the order described in the specification. That is, the steps may be performed in the order as described or simultaneously, or an opposite order.

In this specification, the terms "have", "may have", "include", or "may include" represent the presence of the characteristic (for example, a numerical value, a function, an operation, or a component such as a part"), but do not exclude the presence of additional characteristic.

The term "~unit" used in the specification refers to a software or hardware component such as a field programmable gate array (FPGA) or an ASIC and "~unit" performs some functions. However, "~unit" is not limited to the software or the hardware. "~unit" may be configured to be in an addressable storage medium or may be configured to reproduce one or more processors. Accordingly, as an example, "~unit" includes components such as software components, object oriented software components, class components, and task components, processes, functions, attributes, procedures, subroutines, segments of a program code, drivers, a firmware, a microcode, a circuit, data structures, and variables. A function which is provided in the components and "~units" may be combined with a smaller number of components and "~units" or further divided into additional components and "~units".

Hereinafter, an exemplary embodiment of an apparatus and a method for reducing a map noise of a robot according to the present disclosure will be described in detail with reference to the accompanying drawings.

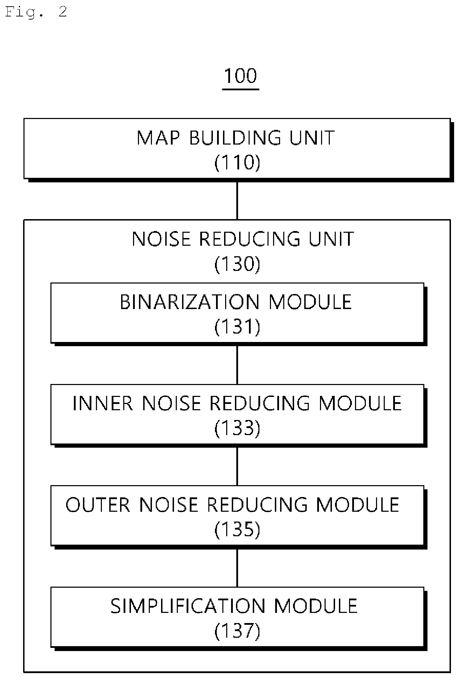

First, a map noise reduction apparatus of a robot according to an exemplary embodiment of the present disclosure will be described with reference to FIGS. 2 to 8.

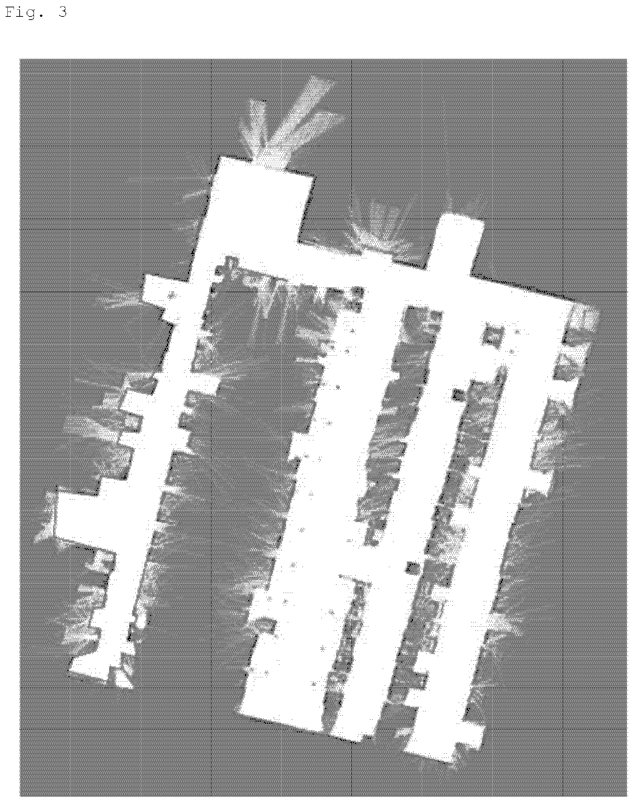

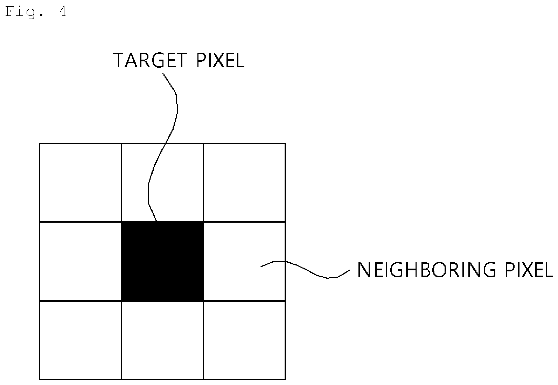

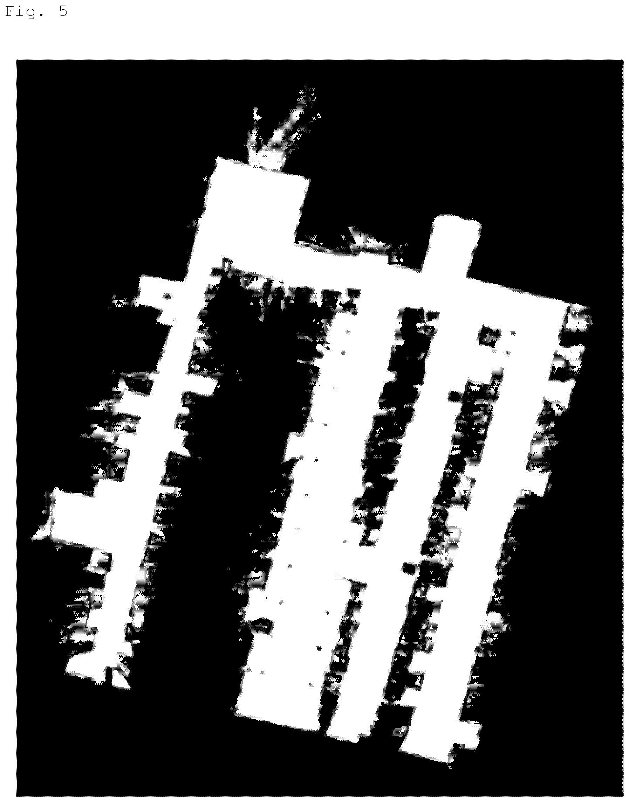

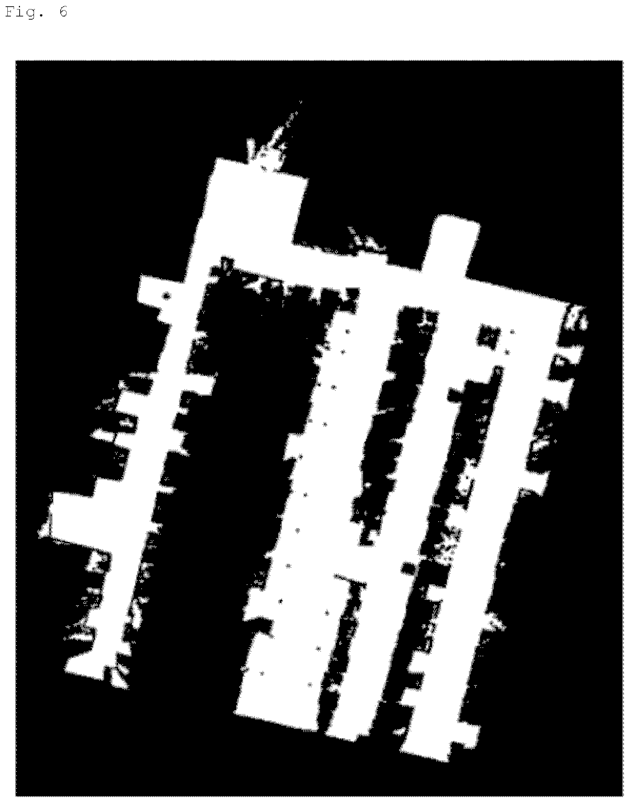

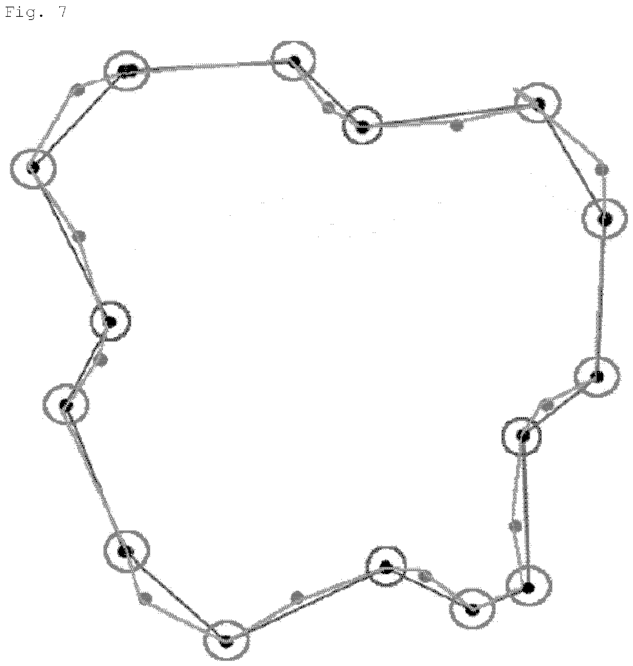

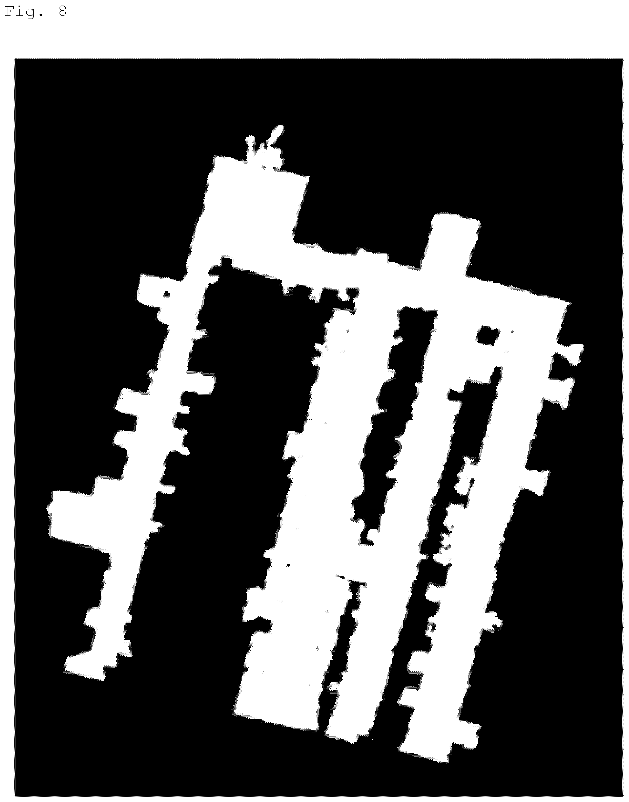

FIG. 2 is a block diagram illustrating a map noise reduction apparatus of a robot according to an exemplary embodiment of the present disclosure, FIG. 3 is a view illustrating an example of a grid map according to an exemplary embodiment of the present disclosure, FIG. 4 is a view for explaining a noise reducing process according to an exemplary embodiment of the present disclosure, FIG. 5 is a view illustrating a grid map from which an inner noise is reduced, in the grid map illustrated in FIG. 3, FIG. 6 is a view illustrating a grid map from which an outer noise is reduced, in the grid map illustrated in FIG. 5, FIG. 7 is a view for explaining a simplifying process according to an exemplary embodiment of the present disclosure, and FIG. 8 is a view illustrating a grid map in which a contour is simplified, in the grid map illustrated in FIG. 6.

Referring to FIG. 2, a map noise reduction apparatus 100 of a robot according to the exemplary embodiment of the present disclosure (hereinafter, a noise reduction apparatus) reduces a noise such as an outer noise and an inner noise which may be caused due to a sensor characteristic and an environmental factor while generating a grid map.

The noise reduction apparatus 100 according to the present disclosure may simplify a contour of the grid map.

In the meantime, the noise reduction apparatus 100 according to the present disclosure is implemented as hardware or software to be loaded in a robot (not illustrated) such as a cleaning robot or a mobile robot. In this case, the noise reduction apparatus 100 loaded in the robot may reduce a noise from a grid map built while the robot moves. By doing this, the robot may perform an operation such as cleaning based on the grid map in which the noise is reduced.

To this end, the noise reduction apparatus 100 may include a map building unit 110 and a noise reducing unit 130.

The map building unit 110 may build a grid map.

For example, the map building unit 110 may acquire a two-dimensional grid map as illustrated in FIG. 3 by means of an infrared (IR) sensor, a position sensitive device (PSD) sensor, a 2D light detection ranging (LiDAR) sensor, a 3D LiDAR sensor, or a bumper sensor. The grid map may be configured by an inner region (a white region of FIG. 3) indicating a space where the robot moves and an outer region (a gray region of FIG. 3) indicating a space where the robot cannot move due to an obstacle such as a wall.

The noise reducing unit 130 may reduce a noise of the grid map built by the map building unit 110.

That is, the noise reducing unit 130 may reduce a noise such as an outer noise or an inner noise which may be caused due to a sensor characteristic and an environmental factor while generating the grid map and simplify the contour of the grid map.

To be more specific, the noise reducing unit 130 includes a binarization module 131, an inner noise reducing module 133, an outer noise reducing module 135, and a simplification module 137.

The binarization module 131 may binarize the grid map to remove a blurred obstacle in the grid map.

For example, the binarization module 131 may binarize values of pixels of the grid map to two values of a predetermined first value (black: 0) and a predetermined second value (white: 255) to more clearly distinguish the inner region (a space where the robot moves) of the grid map from the outer region (a space where the robot cannot move) of the grid map.

That is, the binarization module 131 binarizes the grid map by changing a pixel value into the first value when the pixel value of each pixel of the grid map is smaller than a predetermined reference value and changing the pixel value into the second value when the pixel value is larger than the predetermined reference value.

For example, when it is assumed that the predetermined reference value is 230, the binarization module 131 compares each pixel value of the grid map with the predetermined reference value "230" to change the pixel value to one of the first value (black: 0) and the second value (white: 255). When each pixel value of the grid map is smaller than the predetermined reference value "230", the binarization module changes the pixel value to the first value and when each pixel value is larger than the predetermined reference value "230", changes the pixel value to the second value (white: 255).

As described above, the binarization module 131 may remove the blurred noise (an obstacle which extends to the outside or is blurred due to the color or the material) during the sensing process to generate a grid map. That is, the binarization module 131 may primarily binarize the grid map to display only an obstacle having a high intensity among obstacles displayed on the grid map as a recognized obstacle to remove the noise.

The inner noise reducing module 133 reduces the inner noise of the grid map to reduce the noise generated in the grid map.

That is, the inner noise reducing module 133 reduces the inner noise of the grid map by updating a value of each pixel located in an inner region of the grid map on the bases of values of neighboring pixels.

For example, as illustrated in FIG. 4, when it is assumed that a target pixel has a first value (black: 0) and eight neighboring pixels adjacent to the target pixel have a second value (white: 0), the target pixel is very likely to be a noise. Accordingly, the value of the target pixel is updated on the basis of values of eight neighboring pixels to remove the noise.

To be more specific, the inner noise reducing module 133 changes the pixel value into a first value when an average value of neighboring pixels of a pixel located in the inner region of the grid map is smaller than a predetermined value and changes the pixel value into a second value when the average value of the neighboring pixels of the pixel is larger than the predetermined reference value.

For example, when it is assumed that the predetermined reference value is 128, the inner noise reducing module 133 compares the average value of eight neighboring pixels adjacent to the target pixel with the predetermined reference value "128" to change the value of the target pixel to one of the first value (black: 0) and the second value (white: 255). When the average value of neighboring pixels is smaller than the predetermined reference value "128", the inner noise reducing module changes the value of the target pixel to the first value and when each pixel value is larger than the predetermined reference value "128", changes the value of the target pixel to the second value (white: 255).

At this time, the inner noise reducing module 133 may acquire the average value of the neighboring pixels of the pixel by calculating a weighted average on the basis of a predetermined weight. Here, the predetermined weight is set such that a weight of the neighboring pixel located in the inner region of the grid map has a higher value than a weight of a neighboring pixel located in an outer region of the grid map. Here, the target pixel in the vicinity of the boundary of the outer region and the inner region of the grid map is not likely to be a noise, so that a higher weight is assigned to the neighboring pixel located in the inner region of the grid map than the neighboring pixel located in the outer region of the grid map, among eight neighboring pixels adjacent to the target pixel to lower the possibility that the target pixel is determined as a noise.

By doing this, the inner noise reducing module 133 may acquire the grid map as illustrated in FIG. 5.

As described above, the inner noise reducing module 133 may remove salt and pepper pixels disposed in the inner region of the grid map. The salt and pepper pixels indicates a noise which is randomly marked one by one in the grid map and may include negligible obstacles other than the noise. That is, the inner noise reducing module 133 may reduce the noise according to values of eight pixels adjacent to each pixel. For example, in each pixel, when an average of eight pixels adjacent to the pixel has a second value (white: 255), the pixel is encroached with the second value (white: 255) to remove the noise which is randomly displayed (or negligible).

The outer noise reducing module 135 reduces the outer noise of the grid map to reduce the noise generated at the outside of the grid map.

That is, the outer noise reducing module 135 reduces the outer noise of the grid map by updating values of pixels adjacent to an obstacle on the basis of the shortest distance of each pixel located in the grid map to an obstacle.

To be more specific, the outer noise reducing module 135 calculates a distance from each pixel located in the grid map to the closest pixel having a first value (black: 0) to obtain the shortest distance to the obstacle in four directions (east, west, south, and north).

The outer noise reducing module 135 acquires an obstacle corresponding to the grid map based on the shortest distance of each pixel located in the grid map to the obstacle (the shortest distance in four directions) and changes the value of the pixels adjacent to the obstacle to the first value (black: 0). For example, the shortest distance of each pixel located in the grid map to the obstacle (the shortest distance in four directions) is known so that the obstacle corresponding to the grid map may be acquired based thereon. The value of the pixels adjacent to the obstacle is changed to the first value (black: 0) to remove the outer noise of the grid map.

By doing this, the outer noise reducing module 135 may acquire the grid map as illustrated in FIG. 6.

As described above, the outer noise reducing module 135 may remove the noise included in the outline to erase an erroneously sensed area as an opposite concept to the salt and pepper pixels. The shortest distance from the pixel to the obstacle (for example, how many pixels are spaced apart from a black pixel which is the closest to the pixel) is calculated and the noise caused by the color/material of the obstacle may be removed by erasing the pixel adjacent to the obstacle.

The simplification module 137 may simplify the contour of the grid map to acquire a neat grid map.

That is, the simplification module 137 may acquire one or more independent polygons by a connected-component labeling (CCL) method based on the grid map. Here, the connected-component labeling (CCL) method uses a related art method so that a detailed description will be omitted.

Further, the simplification module 137 simplifies the contour of one or more polygons by Douglas-Peucker method. Here, the Douglas-Peucker method uses a related art method so that a detailed description will be omitted. For example, as illustrated in FIG. 7, the simplification module 137 may simplify a polygon having a curved contour to a polygon having a linear contour.

At this time, the simplification module 137 simplifies the contour of the polygon for all polygons acquired from the grid map using the Douglas-Peucker and leaves a polygon having the largest area among the simplified polygons which overlap each other, and removes the remaining polygons as a noise. Here, the area of the polygon may indicate the number of pixels of the polygon.

By doing this, the simplification module 137 may acquire the grid map as illustrated in FIG. 8.

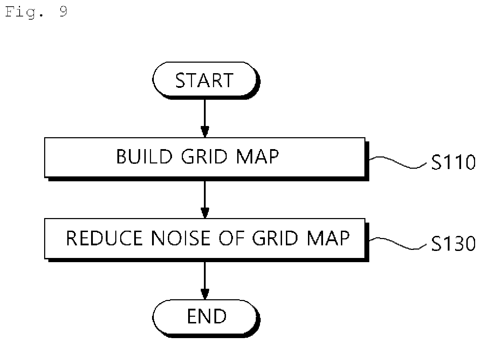

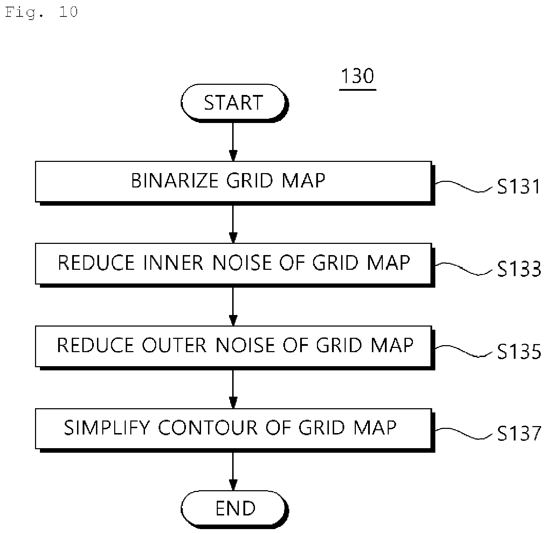

Now, a map noise reduction method of a robot according to an exemplary embodiment of the present disclosure will be described with reference to FIGS. 9 and 10.

FIG. 9 is a flowchart illustrating a map noise reduction method of a robot according to an exemplary embodiment of the present disclosure.

Referring to FIG. 9, the noise reduction apparatus 100 builds a grid map in step S110.

For example, the noise reduction apparatus 100 may acquire a two-dimensional grid map as illustrated in FIG. 3 by means of an infrared (IR) sensor, a position sensitive device (PSD) sensor, a 2D light detection ranging (LiDAR) sensor, a 3D LiDAR sensor, or a bumper sensor. The grid map may be configured by an inner region (a white region of FIG. 3) indicating a space where the robot moves and an outer region (a gray region of FIG. 3) indicating a space where the robot cannot move due to an obstacle such as a wall.

Next, the noise reduction apparatus 100 may reduce the noise of the grid map in step S130.

That is, the noise reduction apparatus 100 may reduce a noise such as an outer noise or an inner noise which may be caused due to a sensor characteristic and an environmental factor while generating the grid map and simplify the contour of the grid map.

FIG. 10 is a flowchart for explaining sub steps of a noise reducing step illustrated in FIG. 9.

Referring to FIG. 10, the noise reduction apparatus 100 binarizes a grid map in step S131.

That is, the noise reduction apparatus 100 binarizes the grid map by changing a pixel value into the first value when the pixel value of each pixel of the grid map is smaller than a predetermined reference value and changing the pixel value into the second value when the pixel value is larger than the predetermined reference value.

For example, when it is assumed that the predetermined reference value is 230, the noise reduction apparatus 100 compares each pixel value of the grid map with the predetermined reference value "230" to change the pixel value to one of the first value (black: 0) and the second value (white: 255). When each pixel value of the grid map is smaller than the predetermined reference value "230", the binarization module changes the pixel value to the first value and when each pixel value is larger than the predetermined reference value "230", changes the pixel value to the second value (white: 255).

Next, the noise reduction apparatus 100 may reduce the inner noise of the grid map in step S133.

That is, the noise reduction apparatus 100 reduces the inner noise of the grid map by updating a value of each pixel located in an inner region of the grid map on the bases of values of surrounding pixels.

To be more specific, the noise reduction apparatus 100 changes the pixel value into a first value when an average value of neighboring pixels of a pixel located in the inner region of the grid map is smaller than a predetermined value and changes the pixel value into a second value when the average value of the neighboring pixels of the pixel is larger than the predetermined reference value.

For example, when it is assumed that the predetermined reference value is 128, the noise reduction apparatus 100 compares the average value of eight neighboring pixels adjacent to the target pixel with the predetermined reference value "128" to change the value of the target pixel to one of the first value (black: 0) and the second value (white: 255). When the average value of neighboring pixels is smaller than the predetermined reference value "128", the noise reduction apparatus changes the value of the target pixel to the first value and when each pixel value is larger than the predetermined reference value "128", changes the value of the target pixel to the second value (white: 255).

At this time, the noise reduction apparatus 100 may acquire the average value of the neighboring pixels of the pixel by calculating a weighted average on the basis of a predetermined weight. Here, the predetermined weight is set such that a weight of the neighboring pixel located in the inner region of the grid map has a higher value than a weight of a neighboring pixel located in an outer region of the grid map.

Next, the noise reduction apparatus 100 may reduce the outer noise of the grid map in step S135.

That is, the noise reduction apparatus 100 reduces the outer noise of the grid map by updating values of pixels adjacent to an obstacle on the basis of the shortest distance of each pixel located in the grid map to an obstacle.

To be more specific, the noise reduction apparatus 100 calculates a distance from each pixel located in the grid map to the closest pixel having a first value (black: 0) to obtain the shortest distance to the obstacle in four directions (east, west, south, and north).

The noise reduction apparatus 100 acquires an obstacle corresponding to the grid map based on the shortest distance of each pixel located in the grid map to the obstacle (the shortest distance in four directions) and changes the value of the pixels adjacent to the obstacle to the first value (black: 0).

Next, the noise reduction apparatus 100 may simplify the contour of the grid map in step S137.

That is, the noise reduction apparatus 100 may acquire one or more independent polygons based on the grid map by the connected-component labeling (CCL) method.

Further, the noise reduction apparatus 100 simplifies the contour of one or more polygons by Douglas-Peucker method.

At this time, the noise reduction apparatus 100 simplifies the contour of the polygon for all polygons acquired from the grid map using the Douglas-Peucker and leaves a polygon having the largest area among the simplified polygons which overlap each other, and removes the remaining polygons as a noise. Here, the area of the polygon may indicate the number of pixels of the polygon. Even though it has been described above that all components of the exemplary embodiment of the present invention are combined as one component or operate to be combined, the present invention is not limited to the exemplary embodiment. In other words, one or more components may be selectively combined to be operated within a scope of the present invention. Further, all components may be implemented as one independent hardware but a part or all of the components are selectively combined to be implemented as a computer program which includes a program module which performs a part or all functions combined in one or plural hardware. Further, such a computer program may be stored in a computer readable media such as a USB memory, a CD disk, or a flash memory to be read and executed by a computer to implement the exemplary embodiment of the present invention. The recording media of the computer program may include a magnetic recording medium or an optical recording medium.

The above description illustrates a technical spirit of the present invention as an example and various changes, modifications, and substitutions become apparent to those skilled in the art within a scope of an essential characteristic of the present invention. Therefore, as is evident from the foregoing description, the exemplary embodiments and accompanying drawings disclosed in the present invention do not limit the technical spirit of the present invention and the scope of the technical spirit of the present invention is not limited by the exemplary embodiments and accompanying drawings. The protection scope of the present invention should be interpreted based on the following appended claims and it should be appreciated that all technical spirits included within a range equivalent thereto are included in the protection scope of the present invention.

## Claims

1. A map noise reduction apparatus of a robot, comprising:
a map building unit which builds a grid map; and
a noise reducing unit which reduces a noise of the grid map build by the map building unit.

2. The region segmentation method according to claim 1, wherein the noise reducing unit includes:
a binarization module which binarizes the grid map;
an inner noise reducing module which reduces an inner noise of the grid map;
an outer noise reducing module which reduces an outer noise of the grid map; and
a simplification module which simplifies a contour of the grid map.

3. The map noise reduction apparatus according to claim 2, wherein the binarization module binarizes the grid map by changing a pixel value into a first value when the pixel value of each pixel of the grid map is smaller than a predetermined reference value and changing the pixel value into a second value when the pixel value is larger than the predetermined reference value.

4. The map noise reduction apparatus according to claim 2, wherein the inner noise reducing module reduces the inner noise of the grid map by updating a value of each pixel located in an inner region of the grid map on the basis of values of neighboring pixels.

5. The map noise reduction apparatus according to claim 4, wherein the inner noise reducing module changes the pixel value into a first value when an average value of neighboring pixels of a pixel located in the inner region of the grid map is smaller than a predetermined value and changes the pixel value into a second value when the average value of the neighboring pixels of the pixel is larger than the predetermined reference value.

6. The map noise reduction apparatus according to claim 5, wherein the inner noise reducing module acquires the average value of the neighboring pixels of the pixel by calculating a weighted average on the basis of a predetermined weight and the predetermined weight is set such that a weight of the neighboring pixel located in the inner region of the grid map has a higher value than a weight of a neighboring pixel located in an outer region of the grid map.

7. The map noise reduction apparatus according to claim 2, wherein the outer noise reducing module reduces the outer noise of the grid map by updating values of pixels adjacent to an obstacle on the basis of the shortest distance of each pixel located in the grid map to the obstacle.

8. The map noise reduction apparatus according to claim 7, wherein the outer noise reducing module acquires the shortest distance to the obstacle by calculating a distance to the closest pixel having a first value with respect to each of pixels located in the grid map and acquires an obstacle corresponding to the grid map on the basis of the shortest distance of each pixel located in the grid map to the obstacle and changes values of pixels adjacent to the obstacle into a first value.

9. The map noise reduction apparatus according to claim 2, wherein the simplification module acquires one or more independent polygons by a connected component labeling (CCL) method on the basis of the grid map and simplifies a contour of one or more polygons using the Douglas-Peucker method.

10. A map noise reduction method of a robot, comprising:
building a grid map; and
reducing a noise of the grid map.

11. The map noise reduction method according to claim 10, wherein the reducing of a noise includes:
binarizing the grid map;
reducing an inner noise of the grid map;
reducing an outer noise of the grid map; and
simplifying a contour of the grid map.

12. The map noise reduction method according to claim 11, wherein in the binarizing of the grid map, the grid map is binarized by changing a pixel value into a first value when the pixel value of each pixel of the grid map is smaller than a predetermined reference value and changing the pixel value into a second value when the pixel value is larger than the predetermined reference value.

13. The map noise reduction method according to claim 11, wherein in the reducing of an inner noise, the inner noise of the grid map is reduced by updating a value of each pixel located in an inner region of the grid map on the basis of values of neighboring pixels.

14. The map noise reduction method according to claim 11, wherein in the reducing of an outer noise, the outer noise of the grid map is reduced by updating values of pixels adjacent to an obstacle on the basis of the shortest distance of each pixel located in the grid map to the obstacle.

15. A computer program stored in a computer readable recording medium to allow a computer to execute the map noise reduction method of a robot according to claim 10.
